# FASCICULE DE BREVET EUROPEEN

(11) **EP 0 850 884 B1**
(45) Date de publication et mention de la délivrance du brevet: **25.06.2003**
(21) Numéro de dépôt: 97403067.8
(22) Date de dépôt: 17.12.1997
(51) Int. Cl.: C03B 5/235, F23D 14/22, F23D 14/32

(54) **Procédé pour améliorer le profil thermique des fours de verre et four de fusion de verre pour sa mise en oeuvre**
Verfahren zur Verbesserung des thermisches Profil einer Glasschmelzofen und Glasschmelzofen benützt dafür
Method for improving the thermal profile in glass-melting furnaces and glass-melting furnace used therefore

(30) Priorité: 31.12.1996 FR 9616259
(43) Date de publication de la demande: 01.07.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Legiret, Thierry, 78117 Toussus Le Noble (FR); Labegorre, Bernard, 75015 Paris (FR); Rio, Laurent, 78000 Versailles (FR); Plessier, Robert, 13002 Marseille (FR)
(74) Mandataire: Vesin, Jacques

(56) Documents cités:
- EP-A- 0 127 513
- WO-A-94/06724
- US-A- 2 800 175
- US-A- 4 911 744
- US-A- 5 116 399
- US-A- 5 147 438
- US-A- 5 242 296

## Description

La présente invention concerne un procédé de fabrication de verre dans un four dans lequel on introduit une charge de verre sous forme solide dans la partie amont du four dans une zone dite d'enfournement dans laquelle se trouve également une zone d'évacuation des fumées de combustion du four, ledit four comportant également une zone de fusion de la charge située dans le milieu du four et chauffée par l'intermédiaire d'au moins un brûleur, ainsi qu'une zone d'affinage de la charge dans laquelle le verre est amené à la température et viscosité désirée avant de sortir du four dans un canal d'alimentation de machines de formage du verre.

Dans les fours de verre, l'enfournement du verre à l'état solide est généralement réalisé en amont du four tandis que le chauffage de la charge est plutôt réalisé dans la partie centrale et aval du four.

On a constaté que, dans certains fours au moins, il existait des points froids dans la zone de voûte du four, notamment au niveau de la partie amont. Ces points froids peuvent se caractériser par des températures de voûte dans cette partie amont inférieures à 1430°C ce qui provoque des condensations de produits alcalins sur les réfractaires de la voûte, qui sont alors responsables d'une dégradation de cette voûte et d'une pollution du bain de verre par des résidus réfractaires résultant de l'attaque de la paroi par ces produits de condensation alcalins.

Il est connu par exemple de EP-A-532 825 ainsi que de EP-A-508139, d'utiliser des flammes, notamment oxycombustibles, qui chauffent la surface du bain de verre dans la zone centrale ou dans la zone aval du four, mais orientée vers la zone amont du four, permettant ainsi de chauffer ainsi cette zone amont.

Le problème rencontré avec ce type de procédé est que lorsqu'on chauffe de façon importante le bain de verre, on produit des points chauds dans la voûte du four, sensiblement au niveau de la zone médiane de celui-ci (point en général le plus chaud si l'on augmentait l'énergie injecté par ces brûleurs en espérant augmenter également la température de voûte dans la zone amont), on dépasserait la température maximale admissible par la voûte et l'on détruirait ainsi les réfractaires dans cette zone de points chauds. Il faut donc accepter un compromis qui n'est pas satisfaisant en règle générale et qui conduit à une température insuffisante dans la zone amont.

L'invention permet d'éviter ces inconvénients. Elle est caractérisée en ce que l'énergie fournie au verre dans la zone d'enfournement est comprise entre 5% à 40% de l'énergie totale fournie au verre dans le four, et en ce que l'énergie fournie au verre est régulièrement répartie sur toute la longueur dudit four, de manière à éviter de dépasser une température de voûte au point chaud du four supérieur à environ 1620°C et de préférence à environ 1590°C., de manière à maintenir une température dans la zone d'enfournement mesurée dans la voûte au moins égale à 1430°C, de préférence environ 1480°C.

De préférence, l'énergie fournie au verre dans la zone d'enfournement est comprise entre environ 20% et environ 30% de l'énergie totale fournie au verre dans le four. Selon un mode préférentiel de réalisation de l'invention dans lequel le four comporte deux conduits d'évacuation de fumées situés sensiblement face à face sur les parois latérales du four à proximité de la paroi arrière du four qui comporte l'ouverture d'enfournement du verre, l'énergie est apportée dans la zone d'enfournement par deux brûleurs situés de part et d'autre de l'ouverture d'enfournement, disposés de préférence de manière symétrique par rapport à l'ouverture d'enfournement.

Ces brûleurs seront de préférence des brûleurs à flamme dite plate (tels que ceux décrits par exemple dans la demande européenne EP-A-0 754 912 ou EP-A-0 754 487) ayant de préférence une flamme dite à faible impulsion (c'est à dire ayant une vitesse de fluides de flamme inférieure à 100m/s et de préférence inférieure à 30m/s) pour éviter les envols de matière solide dans le four (poudre de verre) qui viendraient alors attaquer les parois réfractaires du four.

Selon une variante préférentielle de l'invention que l'on appliquera de préférence par la construction de fours neufs, on disposera les cheminées d'évacuation du four en quinconce, chacune dans l'une des parois latérales du four à proximité de la paroi arrière dudit four dans laquelle se trouve l'ouverture d'enfournement du verre, l'énergie étant apportée dans la zone d'enfournement à l'aide de brûleurs disposés sensiblement en regard de chaque cheminée d'évacuation.

Selon une autre variante, on peut également prévoir une configuration de four dans laquelle inversement l'enfournement se fait latéralement et au moins une cheminée d'évacuation des fumées est située sur la paroi arrière du four, tout en maintenant une disposition des brûleurs identique à celle décrite ci-dessus.

L'invention est applicable aux fours de verre.

La zone d'enfournement telle que définie dans le cadre de la présente invention est sensiblement la zone située en amont de la ligne dite de composition du four qui est une ligne bien connue de l'homme de l'art du verre.

En général, cette ligne de composition se trouve à la limite aval (par rapport au sens d'écoulement du verre) des cheminées d'évacuation (ou des zones d'enfournement dans le cas inverse).

L'invention permet de régulariser le profil de température de la voûte des fours à verre et d'augmenter la productivité de ces fours en optimisant la transmission d'énergie à la charge, tout en évitant les inconvénients des techniques connues.

L'invention peut s'appliquer à un four à verre dont la paroi comporte dans une partie d'extrémité amont du four, des zones d'accès, à savoir au moins une zone d'enfournement d'une charge à fondre et au moins une zone d'évacuation des fumées, au moins un côté de ladite partie d'extrémité amont comportant au moins une desdites zones d'accès, four dans lequel au moins une région munie d'un brûleur oxy-combustible est située dans ladite partie d'extrémité amont, entre la plus en amont desdites zones d'accès et la zone d'accès qui est la plus immédiatement en aval sur l'un des deux côtés de ladite partie d'extrémité amont.

Grâce à cette implantation, les points froids de la voûte localisés sur les premiers mètres de celle-ci dans la direction longitudinale du four considérée d'amont en aval, sont supprimés, et le profil de température de la voûte est notablement régularisé, c'est-à-dire que la température des points chauds n'est pas sensiblement augmentée.

Il en résulte que la longévité de la voûte est accrue par suite de la suppression de la condensation des alcalins, et que les conséquences néfastes des envols sont minimisées grâce à la vitrification précoce de la charge. De plus, l'énergie est mieux répartie à la surface du bain de verre (la surface spécifique de chauffe est accrue), et la qualité est donc améliorée tandis que la productivité du four est augmentée.

D'autres caractéristiques et avantages de l'invention ressortiront de la description qui va suivre, de formes de réalisation de l'invention données à titre d'exemples non limitatifs et illustrées par les dessins ci-joints dans lesquels:
- la figure 1 est une vue schématique en section horizontale d'un four à verre tout oxygène connu ;
- les figures 2 à 6 sont des vues correspondant à celle de la figure 1, de cinq formes de réalisation d'un four à verre tout oxygène selon l'invention ;
- les figures 7 et 8 sont des vues schématiques partielles en section horizontale de deux formes de réalisation d'un four à verre à brûleurs air-combustible selon l'invention ;
- la figure 9 est une vue schématique de côté d'un ensemble constitué par un brûleur oxy-combustible et une lance à oxygène, adapté à équiper notamment la forme de réalisation de la figure 8.

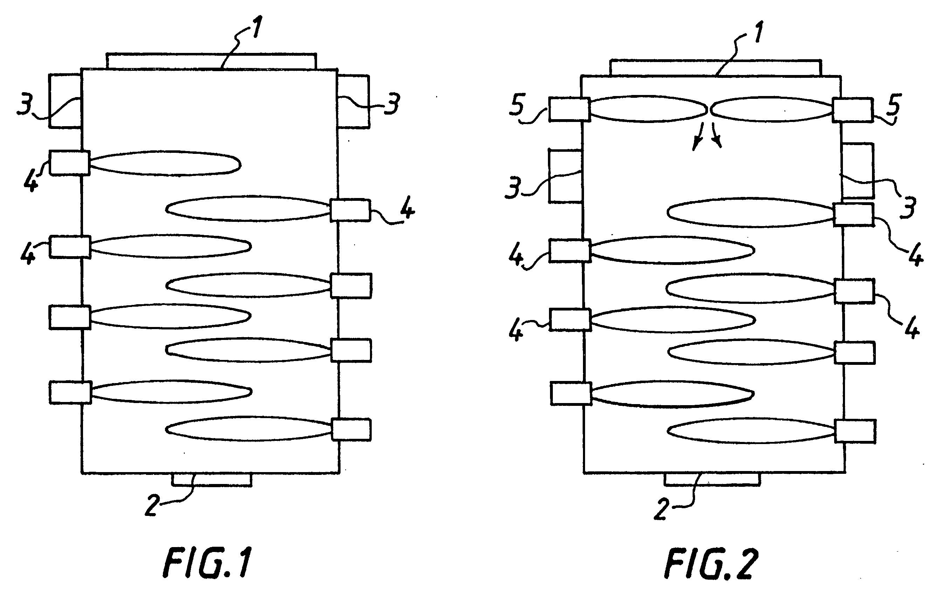

La figure 1 montre très schématiquement un four tout oxygène dont l'implantation des brûleurs oxy-combustible est classique.

Ce four présente, en section par un plan horizontal, une forme générale approximativement rectangulaire dont les petits côtés correspondent aux faces d'extrémités (pignons) du four et les grands côtés aux faces latérales de la paroi de celui-ci.

L'introduction de la charge à vitrifier est effectuée dans l'une des faces d'extrémités (face d'extrémité amont) comportant à cet effet une ou plusieurs zones d'enfournement 1, et l'évacuation du verre fondu est effectuée dans la face d'extrémité opposée (face d'extrémité aval) comportant une ou plusieurs zones de déchargement 2. L'évacuation des fumées est effectuée par des cheminées disposées dans des zones d'évacuation 3 ici situées face à face dans les faces latérales du four, dans la même partie d'extrémité amont que les zones d'enfournement 1.

Des brûleurs 4 oxy-combustible sont disposés dans des régions se succédant le long des faces latérales du four, en quinconce et ici au même niveau, alternativement sur une face et la face opposée, dans la direction longitudinale du four.

Les régions des brûleurs 4 sont toutes en aval de la partie d'extrémité amont du four comportant les zones 1, 2 d'accès à l'intérieur du four par lesquelles sont effectués l'enfournement et l'évacuation des fumées, si l'on se réfère au sens du courant de verre en fusion ou fondu ; la distance entre le premier brûleur 4 et le pignon d'enfournement est donc relativement grande (plusieurs mètres) et cette implantation contribue à l'existence d'une région froide dans la partie d'extrémité amont de la voûte.

Sur la figure 2 et les suivantes, les mêmes éléments portent les mêmes numéros de référence que sur la figure 1, le four représenté étant du même type que précédemment. En revanche, l'implantation relative des différentes zones d'accès et des régions des brûleurs est différente.

Plus précisément, sur la figure 2, la ou les zones d'enfournement 1 de la charge sont également en pignon ; en revanche, deux brûleurs oxy-combustible 5 sont en vis-à-vis sur les faces latérales opposées du four, en amont des zones d'évacuation 3 des fumées, c'est-à-dire dans la partie d'extrémité du four comportant ces zones d'accès 1, 3, si cette partie d'extrémité est définie comme étant la partie du four s'étendant du pignon à la plus en aval de la zone d'accès 1 pour l'enfournement ou de la zone 3 pour l'évacuation des fumées. Le fait qu'il y ait au moins un brûleur 5 dans une région comprise entre une zone d'évacuation 3 des fumées et une zone d'enfournement 1 (et ici deux brûleurs 5 dans deux régions respectives) permet de ramener la température de la voûte du four, dans cette partie d'extrémité du four, à une valeur voisine de celles des autres parties de la voûte, et ainsi d'atteindre le but recherché.

Selon une caractéristique de l'invention, les brûleurs 5 de la partie d'extrémité peuvent être inclinés par rapport au pignon, au moins en partie, de telle sorte que leur flamme soit dirigée notablement vers l'aval afin d'éviter la surchauffe des voussettes des chargeurs des zones d'enfournement 1. Préférentiellement, ils sont orientables de telle manière que la direction de leur flamme détermine avec la perpendiculaire aux faces latérales du four, un angle aigu s'étendant vers l'aval.

De plus, les brûleurs 5 peuvent être orientés d'un certain angle vers le bas, dans toutes les variantes envisagées.

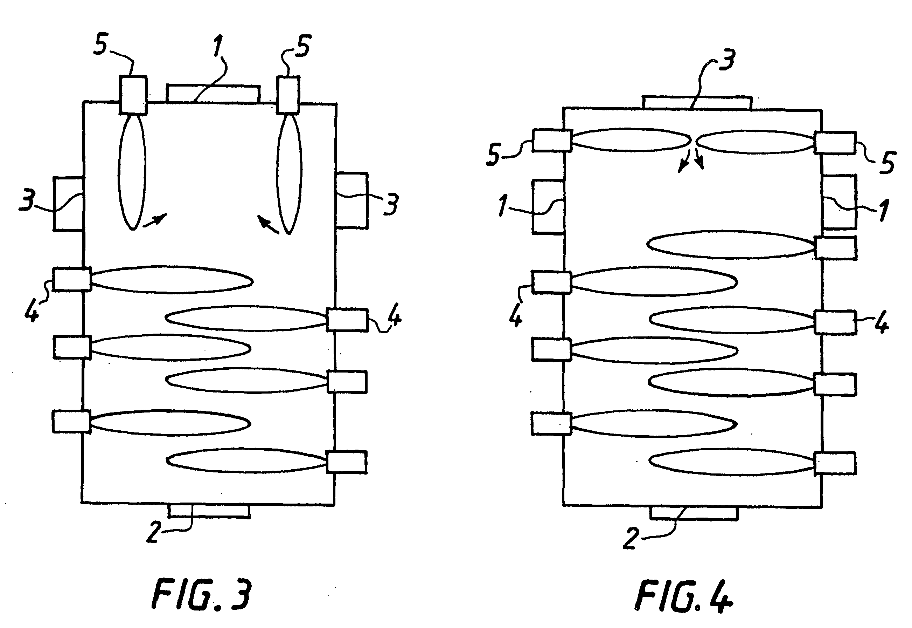

Sur la figure 3, la ou les zones d'enfournement 1 de la charge sont encore en pignon, mais des brûleurs (ici deux brûleurs) oxy-combustible 5 sont disposés également en pignon, de part et d'autre des zones d'enfournement, également en amont des zones d'évacuation 3 des fumées, avec les mêmes avantages.

Ces deux brûleurs 5 peuvent également être inclinés ou orientables mais cette fois de telle sorte que leur flamme soit dirigée notablement vers le plan vertical longitudinal central du four, afin de l'éloigner des cheminées et de mieux répartir leur chaleur dans le four. Préférentiellement, ils sont donc orientables de telle manière que la direction de leur flamme détermine avec la perpendiculaire au pignon, un angle aigu s'étendant vers le plan central défini plus haut.

Sur la figure 4, les zones d'enfournement 1 et la ou les zones d'évacuation 3 des fumées sont inversées par rapport à la figure 2. En d'autres termes, les zones d'évacuation 3 des fumées, au lieu d'être situées dans les faces latérales comme sur la figure 2, sont en pignon, et les zones d'enfournement 1 sont dans les faces latérales (au moins une zone dans chaque face latérale) ; deux brûleurs 5 oxy-combustible sont en vis-à-vis sur les faces latérales opposées du four, en amont des zones d'enfournement 1, 3, c'est-à-dire encore dans la partie d'extrémité du four comportant ces zones d'accès 1, 3, dans des régions respectives comprises entre une zone d'évacuation 3 des fumées et une zone d'enfournement 1.

Les brûleurs 5 sont inclinés, ou orientables comme dans le cas de la figure 2, vers l'aval afin d'éloigner leur flamme des cheminées et de mieux répartir leur chaleur.

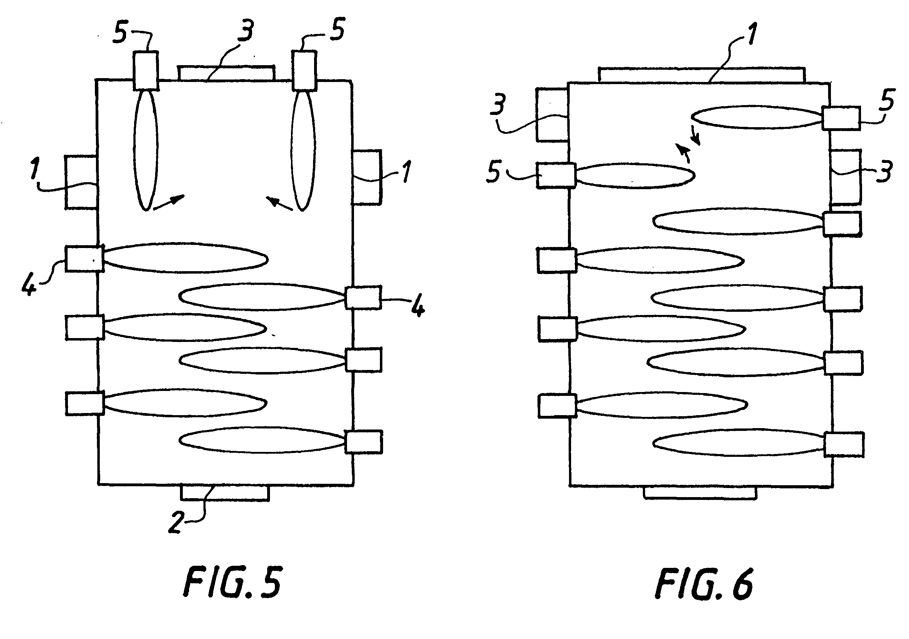

Sur la figure 5, les zones d'enfournement 1 et les zones d'évacuation 3 des fumées sont inversées par rapport à la figure 3. En d'autres termes, la ou les zones d'évacuation 3 des fumées, au lieu d'être situées dans les faces latérales comme sur la figure 3, sont en pignon, et les zones d'enfournement 1 sont dans les faces latérales (au moins une zone dans chaque face latérale) ; deux brûleurs 5 oxy-combustible sont disposés également en pignon, de part et d'autre des zones d'évacuation 3 des fumées, en amont des zones d'enfournement 1 ; les brûleurs 5 sont inclinés ou orientables comme dans le cas de la figure 3, afin d'éloigner leur flamme des voussettes.

Sur la figure 6, la ou les zones d'enfournement 1 sont en pignon et les zones d'évacuation 3 des fumées dans les faces latérales du four ; cependant, les zones d'évacuation 3 des fumées ne sont pas ici disposées en vis-à-vis, mais décalées le long de la direction longitudinale du four, et un brûleur 5 oxy-combustible fait face à chaque zone d'évacuation 3 des fumées. Les régions des deux brûleurs 5 supplémentaires sont donc encore dans la partie d'extrémité du four dans laquelle s'étendent les zones d'accès 1, 3 que sont les zones d'enfournement et les zones d'évacuation des fumées, mais une seule des deux régions des brûleurs 5 est en amont de celle de ces zones d'accès 1, 3 qui est la plus en aval, c'est-à-dire entre deux de ces zones d'accès.

Les deux brûleurs 5 sont inclinés ou orientables par rapport au pignon, le plus proche du pignon de telle sorte que sa flamme s'étende quelque peu vers l'aval pour ne pas dégrader les voussettes, et le plus éloigné du pignon de telle sorte que sa flamme s'étende un peu vers l'amont pour une meilleure répartition de l'énergie fournie par celle-ci, et également pour qu'elle n'approche pas trop la cheminée située en face.

Bien entendu, d'autres implantations sont possibles pour qu'un ou plusieurs brûleurs 5 soient dans au moins une région de la partie d'extrémité du four dans laquelle s'étendent les zones d'accès 1 pour l'enfournement de la charge à fondre et les zones d'accès 3 pour l'évacuation des fumées, afin d'apporter de l'énergie à la charge en amont de la zone de fusion.

Bien que les exemples décrits plus haut concernent des fours tout oxygène, l'invention concerne également les fours à brûleurs air-combustible, ainsi que les fours mixtes comportant à la fois des brûleurs oxy-combustible et des brûleurs air-combustible.

Sur le plan pratique, et plus particulièrement sur les fours existants, les brûleurs 5 peuvent être implantés dans certains des trous de visualisation s'étendant de manière classique dans la paroi du four, et, lorsqu'il s'agit de brûleurs oxy-combustible, ils sont maintenus en fonctionnement en continu, par exemple dans les conditions stoechiométriques.

La détermination précise des caractéristiques de la flamme à obtenir, et ainsi des paramètres qui agissent sur celle-ci, doit obéir à un certain nombre de contraintes, et comme cela a déjà été mentionné, il est nécessaire de réaliser une bonne répartition de l'énergie émise, sans créer de point chaud notamment dans la voûte, le pignon et les voussettes. A cette fin, il faut particulièrement veiller à la température, la stabilité, et la localisation des flammes, et éviter l'interaction de celles-ci. De plus, les brûleurs 5 à oxygène ne doivent pas conduire, notamment par interaction de leur flamme avec les produits de combustion de la flamme d'autres brûleurs 4 notamment à air, à une augmentation des émissions d'oxydes d'azote.

On notera que dans le cas des fours à brûleurs air-combustible classiques, dans lesquels une partie des brûleurs sont utilisés pour la combustion, puis arrêtés tandis que les brûleurs restants qui leur font face sont utilisés, avant d'être à leur tour arrêtés pour que les premiers brûleurs soient à nouveau utilisés et ainsi de suite, généralement, les conduits servant à amener l'air lors du fonctionnement du brûleur correspondant servent également à évacuer les fumées lorsque le fonctionnement du brûleur est arrêté. Aussi, la zone d'évacuation des fumées la plus en amont, qui n'est autre que la zone où débouche le conduit d'amenée d'air du brûleur air-combustible le plus en amont, définit avec la zone d'enfournement (ou les zones d'enfournement), la partie d'extrémité du four dans laquelle, selon l'invention, on trouvera la région du brûleur supplémentaire (ou les régions des brûleurs supplémentaires). Dans ce cas, au moins un brûleur supplémentaire oxy-combustible est donc implanté dans une région située en amont de la zone du brûleur air-combustible le plus en amont qui joue le rôle de la zone d'évacuation des fumées des formes de réalisation des figures 1 à 6, et qui porte pour cette raison la même référence numérique.

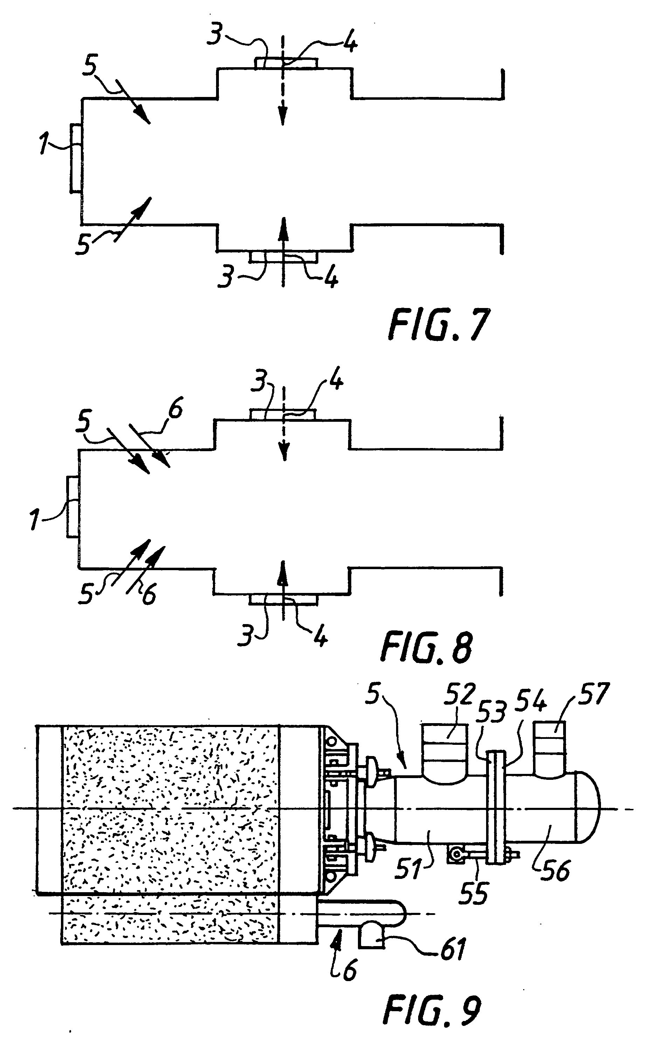

La figure 7 montre une partie d'extrémité amont d'un four à brûleurs air-combustible avec un tel brûleur 4 symbolisé en fonctionnement, la zone située en face, dans laquelle se trouve un autre brûleur 4, mais qui n'est pas en service, étant alors utilisée en tant que zone d'évacuation 3 des fumées ; comme quelques minutes plus tard, les rôles des brûleurs air-combustible 4 sont inversés, c'est alors la zone du brûleur précédemment en service qui est utilisée en tant que zone d'évacuation 3 des fumées. Ainsi, dans cette forme de réalisation, les brûleurs oxy-combustible 5 supplémentaires sont dans des régions situées en amont des zones des deux brûleurs air-combustible les plus en amont, dans les faces latérales du four, et les brûleurs 5 sont maintenus en fonctionnement en continu, par exemple dans les conditions stoechiométriques.

Dans ce type de fours, selon l'invention, on préconise que les brûleurs oxy-combustible apportent 5 à 10% de la puissance totale du four, des vitesses de produits de combustion et/ou de réactifs en sortie du brûleur de 10 à 20 m/s, une inclinaison dans un plan vertical de 0 à 15 degrés du brûleur en direction de la charge, et une inclinaison dans un plan horizontal de 0 à 30 degrés du brûleur vers l'aval du four.

Par exemple, dans un four à régénérateurs transversaux de grande capacité (500 tonnes/jour ; 30 mètres x 10 mètres) pour la production de verre plat flotté, on a adapté deux brûleurs oxy-combustible basse impulsion inclinés de 18 degrés vers l'aval du four, avec un débit d'oxygène de 400 Nm³/h, un débit de gaz combustible de 220 Nm³/h, et une vitesse des réactifs dans le brûleur de l'ordre de 30 m/s. Dans ces conditions, la tirée a pu être augmentée de 10% avec une réduction sensible de la consommation spécifique, sans modification des températures critiques dans le four, sans dégradation de la qualité du verre, et sans augmentation des émissions d'oxydes d'azote.

Il est possible d'améliorer encore la technique décrite en référence à la figure 7 en étageant l'apport d'oxygène dans la flamme du brûleur oxy-combustible, ce qui diminue les températures de flamme et sous certaines conditions améliore le transfert thermique vers la charge.

La figure 8 montre un exemple d'application de ce perfectionnement au four représenté partiellement sur la figure 7. Dans cette forme de réalisation, sous chaque brûleur oxy-combustible 5 (à côté sur la représentation schématique) est disposée une lance à oxygène 6 qui complète la combustion riche en combustible (ici en fioul) dans le brûleur 5. La richesse de fonctionnement du brûleur, définie par .... (?), fixée à une valeur comprise entre 1,2 et 2,2. La vitesse d'injection de l'oxygène dans la lance 6 est un paramètre important pour contrôler le mélange des réactifs et par conséquent la combustion ; selon l'invention, on préconise une vitesse comprise entre 10 et 150 m/s. Il est aussi possible d'associer une lance à certains brûleurs oxy-combustible et pas à d'autres. Il est également possible et avantageux d'utiliser deux dispositifs brûleur + lance en faisant fonctionner les brûleurs en alternance de façon à suivre les cycles d'inversion du four ; cette variante permet d'augmenter de façon significative la puissance maximale sans atteindre des températures critiques pour les superstructures du four ; ainsi, pour chaque phase comprise entre deux inversions, seul fonctionne le brûleur 5 placé du côté des flammes à air, tandis que les deux lances 6 (une de chaque côté du four) fournissent l'oxygène nécessaire pour compléter la combustion dans la flamme riche en combustible au niveau du brûleur à oxygène. La richesse de fonctionnement du brûleur est également comprise entre 1,2 et 2,2, et la répartition du débit d'oxygène complémentaire entre la racine et la pointe de flamme est ici comprise entre 20/80 et 60/40 %, tandis que la vitesse d'injection de l'oxygène dans les lances est de l'ordre de 10 à 150 m/s.

La figure 9 montre, dans un ensemble brûleur oxycombustible/lance à oxygène, la superposition de ces deux dispositifs. Le brûleur 5, à conduits d'oxygène et de combustible concentriques, comporte un module 51 comportant une entrée 52 pour l'oxygène, assemblé, par des brides 53, 54 et des moyens de fixation 55, à un module 56 comportant une entrée 57 pour le combustible ; la lance à oxygène 6 est accolée et fixée sous le brûleur oxy-combustible 5 et est munie, comme chacun des deux modules du brûleur, d'une entrée latérale 61, pour l'oxygène, tandis que les axes longitudinaux du brûleur 5 et de la lance 6 sont ici parallèles.

Les exemples de réalisation décrits se rapportent à des brûleurs 5 dans lesquels le combustible peut être du fioul, ou tout autre combustible approprié.

Conformément à la terminologie en vigueur, on entend par brûleur oxy-combustible un brûleur dont le gaz associé au combustible est notablement plus riche en oxygène que l'air, par exemple un gaz comportant au moins 40 % et de préférence au moins 50 % d'oxygène, par exemple un mélange d'air et d'oxygène.

## Revendications

1. Procédé de fabrication de verre dans un four dans lequel on introduit une charge de verre sous forme solide dans la partie amont du four dans une zone dite d'enfournement (1) dans laquelle se trouve également une zone d'évacuation des fumées (3) de combustion du four, ledit four comportant également une zone de fusion de la charge située dans le milieu du four et chauffée par l'intermédiaire d'au moins un brûleur(4, 5), ainsi qu'une zone d'affinage de la charge dans laquelle le verre est amené à la température et viscosité désirée avant de sortir du four dans un canal d'alimentation de machines de formage du verre, procédé **caractérisé en ce que** l'énergie fournie au verre dans la zone d'enfournement (1) est comprise entre 5% à 40% de l'énergie totale fournie au verre dans le four, et **en ce que** l'énergie fournie au verre est régulièrement répartie sur toute la longueur dudit four, de manière à éviter de dépasser une température de voûte au point chaud du four supérieur à environ 1620°C et de préférence à environ 1590°C., de manière à maintenir une température dans la zone d'enfournement (1) mesurée dans la voûte au moins égale à 1430°C.

2. Procédé selon la revendication 1, **caractérisé en ce que** l'énergie fournie au verre dans la zone d'enfournement (1) est comprise entre environ 20% et environ 30% de l'énergie totale fournie au verre dans le four.

3. Procédé selon l'une des revendications 1 ou 2, dans lequel le four comporte deux conduits d'évacuation des fumées (3) situés sensiblement face à face sur les parois latérales du four à proximité de la paroi arrière dudit four qui comporte l'ouverture d'enfournement du verre, **caractérisé en ce que** l'énergie est apportée dans la zone d'enfournement par deux brûleurs (5) situés de part et d'autre de l'ouverture d'enfournement.

4. Procédés selon la revendication 3, **caractérisé en ce que** ces brûleurs (5) sont disposés de manière sensiblement symétrique par rapport à l'ouverture d'enfournement.

5. Procédé selon l'une des revendications 3 ou 4, **caractérisé en ce que** lesdits brûleurs (5) sont des brûleurs à flamme dite plate.

6. Procédé selon l'une des revendications 1 ou 2, **caractérisé en ce qu'**il comporte deux cheminées d'évacuation (3) des fumées disposées en quinconce, chacune dans l'une des parois latérales du four à proximité de la paroi arrière dudit four dans laquelle se trouve l'ouverture d'enfournement (1) du verre, l'énergie étant apportée dans la zone d'enfournement (1) à l'aide de brûleurs (5) disposés sensiblement en regard de chaque cheminée d'évacuation (3).

7. Procédé selon l'une des revendications 3 à 6, **caractérisé en ce que** lesdits brûleurs (5) sont des brûleurs dits à faible impulsion afin de limiter les envols de verre solide dans la zone d'enfournement.

8. Procédé selon l'une des revendications précédentes, **caractérisé en ce que** chaque conduit d'évacuation (3) des fumées est remplacé par une ouverture d'enfournement (1) de verre et vice-versa.

## Patentansprüche

1. Verfahren zur Herstellung von Glas in einem Ofen, in dem eine Glascharge in fester Form in den stromaufwärtigen Teil des Ofens in einen Beschickungsbereich (1) eingeführt wird, in dem sich ebenso ein Abführungsbereich (3) für Verbrennungsrauchgase des Ofens befindet, wobei der Ofen ebenso einen Schmelzbereich der Charge, der in der Mitte des Ofens liegt und mittels zumindest eines Brenners (4, 5) erwärmt wird, sowie einen Läuterbereich für die Charge umfasst, in der das Glas auf die gewünschte Temperatur und Viskosität gebracht wird, bevor es in einem Zufuhrkanal für Glasformmaschinen den Ofen verläßt, **dadurch gekennzeichnet, dass** die dem Glas in dem Beschickungsbereich (1) zugeführte Energie zwischen 5% und 40% der Gesamtenergie ausmacht, die dem Glas in dem Ofen zugeführt wird, und dass die dem Glas zugeführte Energie gleichmäßig auf die ganze Länge des Ofens verteilt ist, um so das Überschreiten einer Gewölbetemperatur am Warmpunkt des Ofens zu vermeiden, die größer als etwa 1620°C und vorzugsweise etwa 1590°C ist, so dass in dem Beschickungsbereich (1) eine in dem Gewölbe gemessene Temperatur von zumindest gleich 1430°C aufrechterhalten wird.

2. Verfahren nach Anspruch 1, **dadurch gekennzeichnet, dass** die dem Glas in dem Beschickungsbereich (1) zugeführte Energie zwischen etwa 20% und etwa 30% der Gesamtenergie ausmacht', die dem Glas in dem Ofen zugeführt wird.

3. Verfahren nach einem der Ansprüche 1 oder 2, bei dem der Ofen zwei Abführleitungen (3) für Rauchgase umfasst, die auf den Seitenwänden des Ofens nahe der Rückwand des Ofens, die die Beschickungsöffnung für Glas umfasst, sich im Wesentlichen gegenüberliegen, **dadurch gekennzeichnet, dass** die Energie in dem Beschickungsbereich durch zwei Brenner (5) zugeführt wird, die auf beiden Seiten der Beschickungsöffnung liegen.

4. Verfahren nach Anspruch 3, **dadurch gekennzeichnet, dass** diese Brenner (5) im Wesentlichen symmetrisch bezüglich der Beschickungsöffnung angeordnet sind.

5. Verfahren nach einem der Ansprüche 3 oder 4, **dadurch gekennzeichnet, dass** die Brenner (5) Flach-Schlitzbrenner sind.

6. Verfahren nach einem der Ansprüche 1 oder 2, **dadurch gekennzeichnet, dass** sie zwei Abführkamine (3) für Rauchgase umfasst, die versetzt angeordnet sind, jeder in einer der Seitenwände des Ofens nahe der Rückwand des Ofens, in der sich die Beschickungsöffnung (1) für Glas befindet, wobei die Energie in dem Beschickungsbereich (1) mittels Brennern (5) zugeführt wird, die im Wesentlichen gegenüber von jedem Abführkamin (3) liegen.

7. Verfahren nach einem der Ansprüche 3 bis 6, **dadurch gekennzeichnet, dass** die Brenner (5) Schwachstoßbrenner sind, um das Davonfliegen festen Glases in dem Beschickungsbereich zu begrenzen.

8. Verfahren nach einem der vorhergehenden Ansprüche, **dadurch gekennzeichnet, dass** jede Abführleitung (3) für Rauchgase durch eine Beschickungsöffnung (1) für Glas ersetzt wird und umgekehrt.

## Claims

1. Process for manufacturing glass in a furnace in which a glass charge in solid form is introduced into the upstream part of the furnace in a so-called furnace-charging zone (1) in which there is also a zone for removing the combustion smoke (3) from the furnace, the said furnace also including a charge-melting zone located in the middle of the furnace and heated by means of at least one burner (4, 5), as well as a charge-refining zone in which the glass is brought to the desired temperature and viscosity before it leaves the furnace and enters a feed channel of glass-forming machines, which process is **characterized in that** the energy delivered to the glass in the furnace-charging zone (1) is between 5% and 40% of the total energy delivered to the glass in the furnace and **in that** the energy delivered to the glass is uniformly distributed over the entire length of the said furnace so as to avoid exceeding a crown temperature at the hot spot of the furnace of greater than approximately 1620°C and preferably approximately 1590°C, so as to maintain a temperature in the furnace-charging zone (1), measured in the crown, at least equal to 1430°C.

2. Process according to Claim 1, **characterized in that** the energy delivered to the glass in the furnace-charging zone (1) is between approximately 20% and approximately 30% of the total energy delivered to the glass in the furnace.

3. Process according to either of Claims 1 and 2, in which the furnace includes two ducts (3) for removal of smoke, these being located more or less facing each other in the side walls of the furnace near the rear wall of the said furnace which includes the port for charging the furnace with glass, **characterized in that** the energy is brought into the furnace-charging zone by two burners (5) located on each side of the furnace-charging port.

4. Process according to Claim 3, **characterized in that** these burners (5) are placed more or less symmetrically with respect to the furnace-charging port.

5. Process according to either of Claims 3 and 4, **characterized in that** the said burners (5) are so-called flat-flame burners.

6. Process according to either of Claims 1 and 2, **characterized in that** it includes two chimneys (3) for removal of smoke, these being placed in a staggered fashion, each in one of the side walls of the furnace near the rear wall of the said furnace where the port (1) for charging the furnace with glass is located, the energy being brought into the furnace-charging zone (1) by means of burners (5) placed more or less opposite each removal chimney (3).

7. Process according to one of Claims 3 to 6, **characterized in that** the said burners (5) are so-called low-momentum burners so as to limit the fly-off of solid glass in the furnace-charging zone.

8. Process according to one of the preceding claims, **characterized in that** each duct (3) for removal of smoke is replaced with a port (1) for charging the furnace with glass, and vice versa.
